# EUROPÄISCHE PATENTSCHRIFT

(11) **EP 1 873 693 B1**
(45) Veröffentlichungstag und Bekanntmachung des Hinweises auf die Patenterteilung: **08.02.2012**
(21) Anmeldenummer: 07075549.1
(22) Anmeldetag: 29.06.2007
(51) Int. Cl.: G06K 19/077, B29C 45/14

(54) **Spritzguss-Formkörper**
Injection molded article
Produit moulé par injection

(30) Priorität: 29.06.2006 DE 102006030913; 29.06.2006 DE 202006010213 U
(43) Veröffentlichungstag der Anmeldung: 02.01.2008
(73) Patentinhaber: Inotec Barcode Security GmbH, 24539 Neumünster (DE)
(72) Erfinder: Hoffmann, André-Michael, 24613 Aukrug (DE); Meyer, Stefan, 24647 Wasbek (DE); Muschke, Marcus, 24634 Padenstedt-Kamp (DE); Eggers, Stefan, 24539 Neumünster (DE)
(74) Vertreter: Wenzel & Kalkoff

(56) Entgegenhaltungen:
- EP-A- 1 850 276
- WO-A-2005/091213
- WO-A-2008/000253
- US-A- 5 227 222
- US-A- 5 711 839
- US-A- 6 017 653
- US-A1- 2003 038 174
- US-A1- 2004 094 949
- US-A1- 2005 168 339
- US-A1- 2006 092 013
- DATABASE WPI Week 200643 Thomson Scientific, London, GB; AN 2006-417401 XP002510552 -& JP 2006 146745 A (NITTA KOGYO KK) 8. Juni 2006 (2006-06-08)

## Beschreibung

Die Erfindung betrifft einen Spritzguss-Formkörper mit den Merkmalen des Anspruchs 1.

Bei der Überwachung logistischer Abläufe wie etwa dem Transport, der Lagerung, der Bearbeitung oder der Vermietung von Waren ist die Kenntnis des jeweils aktuellen Bestands sowie der genauen Position der einzelnen Waren innerhalb des Ablaufgeschehens von großer Bedeutung. Zu diesem Zweck werden die jeweiligen Waren mit Identifikationselementen versehen, die eine genaue Zuordnung erlauben.

Früher waren die Identifikationselemente auf visuelle schriftliche Kennzeichnungselemente beschränkt, die jeweils vom Personal im Einzelnen abgelesen werden mussten. Eine Verbesserung trat mit der Einführung maschinenlesbarer optischer Identifikationselemente ein, die auf einfache Weise eine zentrale Überwachung und Verwaltung der einzelnen Waren ermöglichen. Zum Erfassen werden die Waren an einem zumeist ortsfest installierten optischen Lesesystem vorbei geführt, das die jeweiligen kodierten Daten mittels einer Leseeinheit optisch ausliest und an ein zentrales rechnergestütztes Verwaltungssystem weiterleitet. Zur Erfassung ist es dabei jedoch erforderlich, dass die Waren beim Passieren des Lesesystems so angeordnet sind, dass zwischen der Leseeinheit und den einzelnen Identifikationselementen ein Sichtkontakt besteht.

Diese Beschränkungen wurden durch die Verwendung von Lesesystemen überwunden, die auf der Basis einer Funkerkennung der Identifikationselemente arbeiten und so eine berührungslose und sichtkontaktfreie Identifikation ermöglichen. Besonders verbreitet ist hierbei die RFID-Technologie (engl.: Radio Frequency Identification; Funkfrequenz-Identifizierung). Ein herkömmliches RFID-System umfasst in der Regel neben den Funkidentifikationselementen stationäre Einheiten (so genannte "Reader"), die zugleich als ortsfeste Sender und Empfänger der Funksignale dienen. Diese stationäre Einheiten sind mit rechnerbasierten Systemen zur Auswertung der so erhaltenen Funksignale verbunden. Als Identifikationselemente werden Funketiketten verwendet (auch als "RFID-Etikett", "RFID-Tag", "RFID-Label" oder "RFID-Chip" bezeichnet), in denen unterschiedliche Transponder-Technologien zum Einsatz gelangen können.

Herkömmliche Funketiketten bestehen in der Regel aus einem flächenförmigen Träger, auf dem sich die elektronischen Schaltkreiselemente befinden, die zum Empfangen und Verarbeiten der Funksignale der stationären Einheit und zum Übertragen einer spezifischen Antwort auf die Funksignale erforderlich sind und einen so genannten Transponder bilden. Derartige Schaltkreiselemente umfassen analoge Schaltkreise zum Empfangen der Funksignale und zum Senden der spezifischen Antwort sowie zumeist digitale Schaltkreise und permanenten Speicher, um die auf das jeweilige Funksignal angepasste spezifische Antwort gemäß der im Speicher eingeschriebenen Information zu erstellen; diese Elemente sind häufig als integrierte Schaltkreise realisiert. Ein weiteres, erforderliches Bauelement ist eine Antenne, die auf dem Funketikett angeordnet ist und die hinsichtlich der jeweils zu übertragenden Frequenzen angepasst ist. Zusätzlich kann ein derartiges Funketikett weitere Schichten aufweisen oder auch vollständig in eine Matrixschicht oder -verkapselung eingebettet sein, wodurch ein Schutz vor korrosiven Prozessen oder mechanischer Beschädigung erzielt werden soll.

Funketiketten werden in die Ware, die mittels dieser Etiketten identifiziert werden soll, entweder nur lose eingelegt oder aber mit dieser verbunden. Soll das Etikett mit der Ware verbunden werden, so wird häufig eine Seite des Funketiketts mit einer Klebemasse beschichtet und mittels der Klebemasse an der Ware befestigt. Eine solche adhäsive Verbindung weist jedoch nur eine begrenzte Stabilität auf, so dass sich das Funketikett von der Ware infolge chemischer oder mechanischer Einwirkungen wieder ablösen kann. Um dies zu vermeiden - insbesondere, um ein willentliches Ablösen des Funketiketts zu verhindern - ist es demnach erforderlich, das Funketikett dauerhaft mit der Ware zu verbinden.

Für herkömmliche Etiketten bietet sich dazu ein Verfahren zur permanenten Verbindung der Etiketten mit Waren aus Kunststoff an, das so genannte "In-Mold-Verfahren" (im britischen Sprachraum auch als "In-Mould-Verfahren" bezeichnet). Dieses Verfahren ist anwendbar bei solchen Waren, die als Formteile im Spritzgussverfahren gefertigt werden. Beim In-Mold-Verfahren wird das Etikett in das leere Spritzgusswerkzeug eingelegt und gegebenenfalls an der Innenseite des Spritzgusswerkzeugs fixiert. Wird nun die erhitzte flüssige oder zähflüssige Formmasse in die Kavität des Spritzgusswerkzeugs eingespritzt, so verbindet sich beim Erhärten der Formmasse die hintere Seite des Etiketts dauerhaft mit dem Formteil aus der erhärteten In-Mold-Formmasse und bildet so den fertigen Spritzguss-Formkörper. Beim In-Mold-Verfahren wird demzufolge durch Hinterspritzen des Etiketts mit der heißen Formmasse eine stoffschlüssige Verbindung erhalten, wobei zusätzlich die Vorderseite des Etiketts bündig mit der Oberfläche des Formteils abschließt.

Soll dieses für herkömmliche Etiketten geeignete Verfahren jedoch auf Funketiketten angewendet werden, so muss berücksichtigt werden, dass die Hauptursache für dauerhafte Funktionsbeeinträchtigungen derartiger Funketiketten in Veränderungen liegt, die während des Fertigungsprozesses der Etiketten oder deren Verarbeitung eintreten. Um dies zu vermeiden müssen insbesondere spezielle Vorkehrungen getroffen werden, um die Gefahr einer Beschädigung der Bauelemente des Funketiketts durch die heiß eingespritzte Formmasse zu verringern. Entsprechende Maßnahmen schließen etwa das Einbetten der Schaltkreiselemente in eine Thermoschutzmasse ein, die einen direkten Kontakt der heißen Formmasse mit den einzelnen Schaltkreiselementen verhindert. Dies ist insbesondere bei Verwendung von integrierten Schaltkreisen in einem Funketikett von Bedeutung, da die für Spritzgussverfahren erforderlichen Temperaturen häufig in der Nähe der für derartige Halbleiterbauelemente maximal zulässigen Temperaturen liegen oder diese sogar überschreiten.

Neben einer solchen direkten thermischen Beschädigung der Bauelemente kann ebenfalls ein durch Temperaturänderungen hervorgerufener Sekundäreffekt zur Funktionsbeeinträchtigung des Funketiketts führen, die von lokalen Temperaturunterschieden an der Verbindungsfläche des Funkelelements mit dem Formteil beim Einspritzen der heißen Formmasse im Spritzgussverfahren hervorgerufen werden. Zwar kann den Folgen eines gleichmäßigen Aufwärmens gegebenenfalls durch die Auswahl geeigneter Materialien für die Bauelemente, Anschlusskontakte, Leiterbahnen, Antennenbahnen und leitfähige Verbindungsmittel wirksam begegnet werden. Jedoch gerade die im Spritzgussverfahren auftretende ungleichmäßige Erwärmung der Verbindungsfläche kann zu ungleichmäßigen Längenänderungen der Bauelemente führen, wodurch die elektrisch leitfähigen Verbindungen der Bauelemente miteinander aufbrechen, was zu einer dauerhaften Beeinträchtigung der elektrischen Funktionalität des Funketiketts führt.

Zum Schutz der Schaltkreiselemente offenbart WO 03/005296 A1 daher den Einsatz einer thermoplastischen Zwischenschicht, die auf diejenige Seite des Funketiketts aufgetragen wird, die später im In-Mold-Verfahren mit dem Formteil verbunden wird. Durch die Verwendung einer derartigen Zwischenschicht ist es möglich, die Temperatur, der sich der Chip *in situ* ausgesetzt sieht, gegenüber den ansonsten beim Spritzgussverfahren üblichen Temperaturen zu verringern und zusätzlich eine räumliche Beabstandung des Chips von dem beim Spritzgussverfahren verflüssigten Bereich zu schaffen. Nachteilig hieran ist jedoch, dass ein derartiges als Funketikett ausgebildetes In-Mold-Flächenelement mit einer mehrlagigen Struktur aus Schichten unterschiedlicher Funktionalität gegenüber herkömmlichen Funketiketten einen aufwändigeren Aufbau aufweist und daher hinsichtlich der Kosten für Material und Fertigung auch teurer ist, etwa durch einen zusätzlichen Laminierungsschritt.

Eine ähnliche Struktur offenbart EP 1 457 301 A1. Darin ist die Herstellung eines Behälters mit integriertem Transponder beschrieben, wonach vor dem Spritzgießen des Behälters ein Einlegeteil in die Spritzgussform eingebracht wird, das den von einer Kunststoffumhüllung eingeschlossenen Transponder enthält.

Ein weiteres In-Mold-Flächenelement ist in JP 2006 146745 A beschrieben. Das darin offenbarte elektronisches Identifikationsetikett weist einen integrierten Schaltkreis und eine Antenne auf, wobei Schaltkreis und Antenne auf ein Substrat aufgebracht sind. Das Substrat ist als mehrlägiges Gehäuse ausgebildet, das eine untere Substratschale und eine obere Substratschale umfasst, wobei zusätzlich eine weitere Substratschale vorgesehen sein kann. Die Substratschalen sind in dem Identifikationsetikett derart miteinander verbunden, dass die elektronischen bestandteile in dem mehrlagigen Gehäuse zwischen den Lagen angeordnet sind.

Aus Dokument US 2005/168339 A1 ist ein In-Mold-Flächenelement mit einem integrierten Schaltkreis und einer Antenne bekannt. Der integrierte Schaltkreis und die Antenne sind zwischen zwei polymeren Füllschichten in eine mehrlagige Trägerstruktur eingebettet. Ein derartiges Etikett ist mit dem zu identifizierenden Gegenstand nicht dauerhaft verbunden und kann von diesem wieder abgelöst werden. In US 2004/094949 A1 ist ein In-Mold-Etikett mit einem RFID-Schaltkreis beschrieben, der zwischen einem flexiblen Substrat und einer hitzeaktivierbaren Klebemassenschicht in eine mehrlagige Trägerstruktur eingebettet ist.

US 2006/092013 A1 offenbart eine Septumabdeckung für medizinische Mehrwegampullen. Die Septumabdeckung weist an ihrer Oberseite einen verzierten Film auf, der mit dem Kappenmaterial der Abdeckung hinterspritzt sein kann. Die bedruckte Seite dieses Films liegt hierbei in einer mehrlagigen Struktur vor. Zur automatisierten Identifizierung des Ampulleninhalts weist die Septumabdeckung weiterhin als Speichereinrichtung einen RFID-Schaltkreis auf, der an der unteren Seite des verzierten Films mittels eines Hochtemperatur-Epoxyklebstoffs oder einer Schweißverbindung befestigt ist; die Antenne der RFID-Speichereinrichtung kann an dem Substrat mittels eines Hochtemperatur-Epoxyklebstoffs oder einer Schweißverbindung befestigt sein oder aber direkt auf dieses aufgedruckt sein

Aus EP-A-1 850 276 ist ein In-Mold-Flächenelement bekannt, das einen Basisträger und einen RFID-Schaltkreis aufweist, wobei der Basisträger vorzugsweise als Platte oder als Folie gestaltet sein kann, die zum Stapeln der Etiketten einstückig mit dem Basisträger ausgebildete Vorsprünge aufweisen kann.

Besonders problematisch ist bei solchen mehrlagigen In-Mold-Flächenelementen, dass der Zusammenhalt der einzelnen Schichten untereinander häufig gering ist, so dass sich die einzelnen Schichten des In-Mold-Flächenelements bereits beim Erhärten der Formmasse voneinander und auch von dem Formteil ablösen. Eine derartiges System genügt daher den hohen mechanisch-thermischen Anforderungen nicht.

Darüber hinaus sind aus dem Stand der Technik auch In-Mold-Flischenelemente mit einlagigen Basisträgern bekannt. So offenbart WO 20051091213 ein RFID-Etikett mit einem heißsiegelbaren Basisträger, der eine Polyesterschicht enthält. Der Basisträger kann hierbei aus einer oder mehreren Schichten bestehen, wobei für die Substrate aus nur einer Schicht lediglich ein einziges System erwähnt wird. Für das System mit einem einlagigen Basisträger werden als Material des Basisträgers Copolyester vorgeschlagen, die sich von einem aliphatischen Glykol und zumindest zwei Dicarbonsäuren herleiten, insbesondere zwei aromatischen Dicarbonsäuren. Dieses Material kann eine Kombination von Ethylenglykol mit Terephthalsäure und Isophthalsäure sein, wobei letztere in einem molaren Verhältnis zueinander vorliegen aus einem Bereich von 50 : 50 bis 90 : 10, insbesondere aus einem Bereich von 65 : 35 bis 85 : 15, besonders bevorzugt mit etwa 82 Mol- % Terephthalsäure und etwa 18 Mol-% Isophthalsäure.

Wird darüber hinaus ein In-Mold-Flächenelement benötigt, das zusätzlich beschriftet oder bedruckt werden soll, so kommt es besonders häufig zum Ablösen des Etiketts vom Formteil. Ein solches beschriftbares oder bedruckbares Etikett wird etwa benötigt, wenn das Formteil aus einem herkömmlichen Kunststoff gefertigt wird, auf dessen Oberfläche übliche Farbmittel wie Druckfarben, Lacke, Farbtinten und dergleichen nicht dauerhaft haften, so dass ein Beschriften derartiger Formkörper nur unter Einsatz aufwändiger Techniken wie etwa Laserbeschriftung, Verwendung spezieller Kunststoff-Farben oder spezifischer Vorbehandlung der zu beschriftenden Oberfläche möglich ist.

Dies kann vermieden werden, wenn das in das Formteil einzubettende In-Mold-Flächenelement bereits von sich aus beschriftbar und bedruckbar ausgebildet ist, so dass der fertige Formkörper dann im Bereich der bündig mit der Oberfläche des Formteils abschließenden Vorderseite des Etiketts beschriftet werden kann. Ein derartiges beschriftbares und/oder bedruckbares In-Mold-Flächenelement kann erhalten werden, wenn das In-Mold-Flächenelement selbst zumindest teilweise aus einem Material besteht, das zur Aufnahme herkömmlicher Farbmittel geeignet ist. In diesem Fall ist es möglich, das In-Mold-Flächenelement vor oder nach dem Einbetten in das Formteil mittels üblicher Druckmaschinen zu bedrucken oder anderweitig zu beschriften, beispielsweise mit Hilfe handelsüblicher Schreibstifte.

Die zur Aufnahme von herkömmlichen Farbmitteln geeigneten Materialien unterscheiden sich jedoch regelmäßig hinsichtlich Zusammensetzung, Beschaffenheit der Oberfläche sowie sonstigen Eigenschaften (beispielsweise dem thermischen Ausdehnungsverhalten) von den entsprechenden Eigenschaften von In-Mold-Formmassen von Formteilen, da ansonsten eine Aufnahme der Farbmittel nicht möglich wäre. Aus diesem Grund sind derartige angepasste Etikettmaterialien üblicherweise auch nicht für ein Einbetten im Rahmen eines Spritzgussverfahrens geeignet, da die Oberfläche der Etiketten nicht oder nur schlecht an der Oberfläche des Formteils anhaftet und diese sich zudem bereits beim Abkühlen des spritzgegossenen Formkörpers regelmäßig wieder vom Formteil ablöst.

Aufgabe der vorliegenden Erfindung war es daher, einen Spritzguss-Formkörper mit einem In-Mold-Flächenelement zur Verfügung zu stellen, das einerseits gegenüber herkömmlichen In-Mold-Flächenelementen einfacher ausgebildet ist und dennoch einen festen Verbund mit einem Formteil beim In-Mold-Verfahren erlaubt, andererseits aber auch mit herkömmlichen Farbmitteln beschriftbar und/oder bedruckbar ist.

Die vorliegende Aufgabe wurde durch einen Spritzguss-Formkörper mit einem In-Mold-Flächenelement der eingangs genannten Art gelöst. Indem ein Teil der Oberfläche des Basisträgers einen Teil der Kontaktseite bildet und der Basisträger gleichzeitig aus einem Material besteht, dessen Schrumpfungsverhalten und Schwindungsverhalten bei Temperaturen kleiner oder gleich der Temperatur der flüssigen In-Mold-Formmasse im wesentlichen gleich ist wie das der In-Mold-Formmasse des Formteils, wird erreicht, dass das In-Mold-Flächenelement spezifisch für das In-Mold-Verfahren angepasst ist. Infolge dieser spezifischen Anpassung fallen die Änderungen der Abmessungen des In-Mold-Flächenelements und die Änderungen der Abmessungen des Formteils im Verlauf des In-Mold-Verfahrens in etwa gleich groß aus.

Mit einer solchen Ausbildung wird vermieden, dass im Verlauf des In-Mold-Verfahrens (genauer gesagt während des Einspritzens der In-Mold-Formmasse in das Spritzgusswerkzeug, des Abkühlens des Spritzguss-Formkörpers und des Herauslösens des erhärteten Spritzguss-Formkörpers aus dem Spritzgusswerkzeug) unterschiedliche Änderungen in den Abmessungen des Formteils und des In-Mold-Flächenelements auftreten, die einen lokalen Versatz der Oberfläche des Formteils gegenüber der Oberfläche des In-Mold-Flächenelements zur Folge haben und so zu einer zumindest während des Abkühlens auftretenden relativen Verschiebung zueinander und somit zu mechanischen Spannungen innerhalb des Verbundsystems führen können. Indem das Material beidseitig der Kontaktfläche, also an der als Kontaktseite ausgebildeten ersten Seitenfläche des In-Mold-Flächenelements und an der Oberfläche des Formteils, lediglich solchen Änderungen der Abmessungen unterworfen ist, die zu jedem Zeitpunkt des In-Mold-Verfahrens in etwa gleich groß ausfallen, wird eine relative Bewegung dieser beiden Bestandteile des Spritzguss-Formkörpers verhindert und dadurch eine lokale Verspannung innerhalb dieser Kontaktfläche vermieden, so dass einem lokalen Ablösen des In-Mold-Flächenelements während des In-Mold-Verfahrens sowie einer Funktionsbeeinträchtigung des Identifikationselements wirksam begegnet wird und daher auf zusätzliche ausgleichende oder schützende Zwischenschichten verzichtet werden kann.

Erfindungsgemäß ist es hierbei erforderlich, dass das Material des Basisträgers eine Zusammensetzung ist, die Polyolefine und Füllstoffe umfasst, wobei die Füllstoffe Siliziumdioxidpartikel und/oder Kieselsäurepartikel enthalten. Infolge der Einbettung dieser besonderen Füllstoffe in die den gerüstkonstituierenden Bestandteil des In-Mold-Flächenelements bildenden Polyolefine ist das In-Mold-Flächenelement für die Aufnahme von Farbstoffen angepasst. Zugleich erlaubt die Zusammenstellung von ebendiesen gerüstkonstituierenden Bestandteil mit grade diesen speziellen Füllstoffen überraschenderweise eine stabile Verbindung des In-Mold-Flächenelements mit dem Formteil beim In-Mold-Verfahren, ohne dass beim Abkühlen ein Ablösen beobachtet wird.

Dies ist um so bemerkenswerter, als die Füllstoffe in dem Material des Basisträgers zu einem hohen Gewichtsanteil enthalten sein können, ohne dass es zu einem Ablösen kommt; so ist beispielsweise bei einem Gewichtsanteil von etwa 60 % eine sehr gute Beschriftbarkeit und Bedruckbarkeit gewährleistet. Günstig ist auch, wenn die Füllstoffe hauptsächlich aus Siliziumdioxidpartikeln bestehen. Zudem ist es von Vorteil, wenn die Polyolefine in dem Material des Basisträgers als Polyolefin-Mischung vorliegen, die hochmolekulares Polyethylen umfasst, insbesondere wenn dieses in dem Material des Basisträgers in einer Mikroporosität von 65 % vorliegt, und ganz besonders, wenn die Polyolefin-Mischung zu einem Anteil von 60 Gew.-% hochmolekulares Polyethylen enthält.

Besonders günstig ist es dabei, wenn das Identifikationselement direkt mit der Oberfläche des Basisträgers verbunden ist und zumindest ein Teil der Oberfläche des Identifikationselements einen freiliegenden Teil der Kontaktseite des In-Mold-Flächenelements bildet. Durch die Anordnung des Identifikationselements direkt an der Oberfläche des Basisträgers wird beim Einspritzen der Formmasse in das Spritzgusswerkzeug ein schnelles Erhitzen der Verbindungsfläche des In-Mold-Flächenelements mit dem Formteil und dadurch auch der elektrischen Komponenten sichergestellt, so dass sich lokale Temperaturunterschiede nicht ausbilden können. Zusätzlich wird durch diese Ausgestaltung sichergestellt, dass die Wärme über die thermisch gut leitenden Leiterbahnen und Antennenbahnen schnellstmöglich abgeführt wird, so dass ein ungleichmäßiges Erwärmen und damit ein Unterbrechen der elektrisch leitfähigen Verbindungen infolge einer heterogenen Temperaturverteilung an der Kontaktfläche vermieden wird.

Von Vorteil ist es hierbei, wenn der an der Kontaktseite des In-Mold-Flächenelements freiliegende Teil der Oberfläche des Identifikationselements zumindest ein Teil der Oberfläche des Antennenelements ist. Infolge dieser Ausbildung der für eine funkbasierte Datenübertragung erforderlichen Antenne wird die Wärme besonders schnell über die Verbindungsfläche verteilt und so einer Beschädigung der elektrisch leitfähigen Verbindungen infolge lokaler Temperaturunterschiede entgegengewirkt. Insbesondere günstig ist die Ausbildung des Antennenelements aus Leitlack. Auf diese Weise wird zum einen ein besonders einfaches Aufbringen der Antennenstruktur auf den Basisträger möglich. Zum anderen kann so ein besonders temperaturunempfindliches Antennenelement bereit gestellt werden, dessen leitende Komponenten lokal an der Oberfläche des Basisträgers im Bereich der zweiten Seitenfläche des In-Mold-Flächenelements haften, so dass sich das gesamte Antennenelement bei Temperaturänderungen zusammen mit dem Material des Basisträger ausdehnt oder zusammenzieht. Bei unterschiedlichen Temperaturen ist hierdurch gleichzeitig ein leitender Kontakt des Antennenelements wie auch eine gute mechanische Verbindung mit dem Basisträger möglich.

Günstig ist es ferner, wenn das Identifikationselement als RFID-Transponder ausgebildet ist. Hierdurch kann bei der Auswahl der stationären Einheiten und der zur Auswertung der Funksignale erforderlichen rechnerbasierten Systemen auf bestehende Systeme aus der RFID-Technologie zurückgegriffen werden.

Besonders vorteilhaft ist es, wenn das Schaltkreiselement als integrierter Schaltkreis ausgebildet ist, der mit dem Antennenelement kontaktiert in eine Thermoschutzmasse eingebettet ist. Hierdurch wird eine Platz sparende Anordnung des Schaltkreiselements möglich, die auf besonders effiziente Weise gegenüber einer hohen Temperatur in der plastisch erweichten In-Mold-Formmasse geschützt ist.

Überdies günstig ist es, wenn der Basisträger zumindest im Bereich der zweiten Seitenfläche des In-Mold-Flächenelements zusätzlich zur Aufnahme von Farbmitteln angepasst ist. Hierdurch ist es möglich, die Seite des In-Mold-Flächenelements, die im Spritzguss-Formkörper (also im Verbund mit dem Formteil) vom Formteil weg nach außen gerichtet ist, auf besonders einfache Weise zu beschreiben oder zu bedrucken.

Zusätzlich kann das In-Mold-Flächenelement an seiner zweiten Seitenfläche zumindest ein weiteres Identifikationselement zur optischen Identifikation aufweisen. Hierdurch ist es möglich, die jeweiligen Spritzguss-Formkörper zusätzlich auch mittels optischer Verfahren zu identifizieren. Auf diese Weise wird zum einen eine einfache Möglichkeit zur Überprüfung der per Funk übertragenen Daten und somit eine sinnvolle Redundanz geschaffen, zum anderen wird sichergestellt, dass eine Identifizierung auch ohne stationäre Einheiten zur funkbasierten Datenübertragung möglich ist. Besonders günstig ist es hierbei, wenn das weitere Identifikationselement zumindest einen Flächenbereich mit einem zur optischen Identifikation aufgedruckten Barcode aufweist. Ein derartiger Barcode (auch als Strichcode oder Identcode bezeichnet) ist mit herkömmlichen Lesegeräten auslesbar, die in nahezu jedem Unternehmen vorhanden sind.

Die Erfindung stellt einen Spritzguss-Formkörper mit einem In-Mold-Flächenelement der zuvor beschriebenen Art und mit einem Formteil aus einer In-Mold-Formmasse zur Verfügung, wobei die In-Mold-Formmasse bei Temperaturen unterhalb der Temperatur der plastisch erweichten In-Mold-Formmasse ein wenigstens im wesentlichen gleiches Schrumpfungsverhalten und ein wenigstens im wesentlichen gleiches Schwindungsverhalten wie der Basisträger aufweist. Durch die doppelte gegenseitige Anpassung wird zusätzlich zu der Anpassung des In-Mold-Flächenelements synergistisch eine besonders temperaturbeständige Verbindung zwischen dem In-Mold-Flächenelement und dem Formteil erhalten. Der Spritzguss-Formkörper kann ansonsten beliebig ausgestaltet sein, etwa als stapelbarer Stückgutbehälter, der im leeren Zustand zusammenfaltbar ausgebildet ist. Natürlich ist die Ausbildung der Oberfläche nicht bloß auf flache Geometrien beschränkt, sondern die Oberfläche kann ebenfalls gekrümmt oder unregelmäßig strukturiert ausgeführt sein.

Günstig ist es hierbei, wenn der Basisträger des In-Mold-Flächenelements und das Formteil aus polyolefinbasierten Materialien bestehen, wobei es insbesondere vorteilhaft ist, wenn die polyolefinbasierten Materialien Niederdruckpolyethylen zu einem Massenanteil enthalten, der den größten Massenanteil des Polymeranteils innerhalb dieser polyolefinbasierten Materialien darstellt. Hierdurch wird eine mechanisch besonders widerstandsfähige und korrosionsbeständige Ausbildung des Spritzguss-Formkörpers erreicht, die dank der Recyclebarkeit der Materialien zugleich in ökologischer wie in ökonomischer Hinsicht sinnvoll ist.

Das erfindungsgemäße In-Mold-Flächenelement kann beispielsweise in einem Verfahren erhalten werden, das die Schritte eines Ausbildens des Basisträgers entsprechend der im In-Mold-Verfahren einzusetzenden In-Mold-Formmasse des Formteils hinsichtlich eines Schrumpfungsverhaltens und Schwindungsverhaltens, das bei Temperaturen unterhalb der Temperatur der plastisch erweichten In-Mold-Formmasse dem der In-Mold-Formmasse wenigstens im wesentlichen gleich ist, eines Aufbringens des Antennenelements auf eine erste Seite des Basisträgers und eines Befestigens des Schaltkreiselements auf der ersten Seite des Basisträgers und eines Kontaktierens des Schaltkreiselements mit dem Antennenelement umfasst. Mit diesem Verfahren ist es möglich, die Herstellung des gut haftenden In-Mold-Flächenelements auf besonders einfache und kostengünstige Weise durchzuführen.

Zur weiteren Vereinfachung dieses Herstellungsverfahren kann das Antennenelement aufgebracht werden, indem die erste Seite des Basisträgers mit einem Leitlack bedruckt wird. In diesem Fall muss das Verfahren einen weiteren Verfahrensschritt umfassen, der vorzugsweise nach dem Aufbringen des Antennenelements und vor dem Befestigen und Kontaktieren des Schaltkreiselements durchgeführt wird. Bei diesem zusätzlichen Verfahrensschritt handelt es sich um ein Trocken des Antennenelements bei erhöhten Temperaturen, um etwaige Lösemittelreste des Leitlacks schonend zu entfernen und so einer Blasenbildung infolge Ausgasens dieser Lösemittelreste beim späteren In-Mold-Verfahren zu verhindern.

Besonders günstig ist es ferner, wenn das Verfahren einen weiteren Verfahrensschritt umfasst, bei dem das Schaltkreiselement in eine Thermoschutzmasse eingebettet wird. Hierdurch wird eine besonders effiziente Abschirmung des Schaltkreiselements gegenüber Temperaturen erreicht, die im Verlauf des In-Mold-Verfahrens auftreten und eine Beschädigung des Identifikationselements zur Folge haben. Da diese Abschirmung günstigerweise auch die elektrischen Kontakte des Schaltkreiselements mit dem Antennenelement und ebenfalls die mechanische Verbindung des Schaltkreiselements mit dem Basisträger umfasst, wird dieser Schritt erst nach dem Befestigen und Kontaktieren des Schaltkreiselements durchgeführt.

Vorteilhaft ist das Verfahren, wenn es einen weiteren Verfahrensschritt umfasst, bei dem ein weiteres Identifikationselement zur optischen Identifikation aufgebracht wird. Ein derartiges Aufbringen umfasst ein Bedrucken der zweiten Seitenfläche des In-Mold-Flächenelements mit dem weiteren Identifikationselement. Besonders günstig ist es hierbei, wenn das Aufbringen des weiteren Identifikationselements weiterhin ein Schutzversiegeln der mit dem Identifikationselement zur optischen Identifikation bedruckten zweiten Seitenfläche des In-Mold-Flächenelements umfasst. Auf diese Weise wird das Identifikationselement zur optischen Identifikation besonders beständig und widerstandsfähig ausgebildet.

Von Vorteil kann es zudem sein, wenn das Verfahren einen weiteren Verfahrensschritt umfasst, der vor dem Aufbringen des Antennenelements durchgeführt wird, nämlich eine Vorbehandlung zumindest einer Seite des Basisträgers zur Verbesserung des Haftungsvermögens. Mit dieser Oberflächenmodifikation kann eine bessere Haftung auf der Oberfläche der Seite des Basisträgers erhalten werden, beispielsweise für das Aufbringen des Antennenelements, des Schaltkreiselements, eines Farbmittels oder für eine Schutzversiegelung. Außerdem kann mit einem derartigen Verfahrensschritt die Haftung des In-Mold-Flächenelements auf dem Formteil verbessert werden.

Der erfindungsgemäße Spritzguss-Formkörper kann beispielsweise in einem Verfahren erhalten werden, das die Schritte eines Ausbildens der im In-Mold-Verfahren einzusetzenden In-Mold-Formmasse des Formteils hinsichtlich eines Schrumpfungsverhaltens und Schwindungsverhaltens, das bei Temperaturen unterhalb der Temperatur der plastisch erweichten In-Mold-Formmasse dem des Basisträgers des In-Mold-Flächenelements wenigstens im wesentlichen gleich ist, eines Einbringens des In-Mold-Flächenelements in ein leeres Spritzgusswerkzeug, eines wiederablösbaren Fixierens des In-Mold-Flächenelements in dem Spritzgusswerkzeug, eines Einspritzens der plastisch erweichten In-Mold-Formmasse in das Spritzgusswerkzeug und eines Abkühlens der In-Mold-Formmasse umfasst. Nach diesem Verfahren kann die Herstellung des robusten Spritzguss-Formkörpers auf ausnehmend einfache und kostengünstige Weise durchgeführt werden.

Als flächenförmiger Basisträger kommen grundsätzlich alle herkömmlichen flachen oder strukturierten Basisträger in Betracht, die starr oder flexibel ausgebildet sind, also Bänder, Folien, Etiketten, Platten, Abschnitte und dergleichen. Üblicherweise können diese aus den üblichen Materialien hergestellt sein, beispielsweise aus natürlichen Trägermaterialien wie Papier oder Furnierholz oder aber aus synthetischen Materialien wie einem Polyolefin, einem Polyamid, einem Polyester, einem Polyurethan oder dergleichen. Natürlich können die Basisträger auch aus modifizierten Materialien wie etwa aus biaxial orientiertem Polypropylen (BOPP) oder aus einer Kombination unterschiedlicher Materialien aufgebaut sein, die etwa schichtweise verbunden oder auch intensiv durchsetzt sind, beispielsweise aus Polyolefinen wie Polyethylen oder Polypropylen, die mit Füllstoffen versetzt sind. Als Formen dieses Basisträgers können alle flächenförmigen geometrischen Formen verwendet werden, regelmäßige wie unregelmäßige.

Erfindungsgemäß ist es dabei erforderlich, dass das Material des Basisträgers eine Zusammensetzung ist, die Polyolefine wie Polyethylen oder Polypropylen und Füllstoffe umfasst, wobei die Füllstoffe Siliziumdioxidpartikel und/oder Kieselsäurepartikel enthalten.

Zumindest ein Teil der Oberfläche des Basisträgers liegt an der Kontaktseite an der ersten Seitenfläche des In-Mold-Flächenelements frei und bildet somit einen Teil dieser Kontaktseite. Somit erfordert das In-Mold-Flächenelement an der Kontaktseite außer dem Basisträger und gegebenenfalls dem Identifikationselement notwendigerweise keine weiteren Komponenten wie etwa weitere Schichtlagen oder dergleichen.

Dies schließt jedoch nicht aus, dass die erste Seitenfläche des In-Mold-Flächenelements ausschließlich von der einen Seite des Basisträgers gebildet wird und dass das Identifikationselement an der anderen Seite des Basisträgers angebracht ist. Bei einer derartigen Ausbildung kann das Identifikationselement an der zweiten Seitenfläche des In-Mold-Flächenelements frei liegen oder auch gegen eine mechanische Beschädigung des mit dem Formteil verbundenen Identifikationselement geschützt ausgebildet sein, etwa durch eine Abdeckung mit einem zweiten flächenförmigen Basisträger. Diese sandwichartige Abdeckung liegt dann jedoch nicht an der Kontaktfläche des In-Mold-Flächenelements vor, sondern vielmehr an der zweiten Seitenfläche des In-Mold-Flächenelements.

Ferner ist es erforderlich, dass der Basisträger aus einem Material besteht, das bei unterschiedlichen Temperaturen zu jedem Zeitpunkt mit dem Formteil verbunden bleibt, ohne sich von diesem abzulösen, insbesondere bei den Temperaturen, die im In-Mold-Verfahren auftreten. Dies bedeutet, dass der Basisträger aus einem anwendungsspezifischen, das heißt auf die jeweilige Anwendung abgestimmten Material bestehen muss, das ein wenigstens im wesentlichen gleiches Schrumpfungsverhalten und ein wenigstens im wesentlichen gleiches Schwindungsverhalten aufweist wie die In-Mold-Formmasse des Formteils. Natürlich umfasst dies auch ein Material des Basisträgers, das ein gleiches Schrumpfungsverhalten und ein gleiches Schwindungsverhalten aufweist wie die In-Mold-Formmasse des Formteils.

Als Schrumpfung wird eine Änderung der Form oder eine Änderung der äußeren Abmessungen eines polymeren Werkstücks verstanden, die ohne Veränderung des Gesamtvolumens eintritt. Als Schwindung wird eine Änderung der Form oder eine Änderung der äußeren Abmessungen eines polymeren Werkstücks verstanden, bei der ebenfalls eine Änderung des Gesamtvolumens auftritt. Eine derartige Volumenänderung kann etwa aufgrund von Kristallisationsprozessen, von Wärmedehnung oder auch von Änderungen der Zusammensetzung des Werkstücks eintreten, beispielsweise beim Verdampfen von in der Matrix verbliebenem Lösemittel oder bei der Synärese einer polymeren Matrix. Das Vorliegen eines gleichen Schrumpfungsverhalten und Schwindungsverhalten umfasst hierbei ebenso Kontraktionsprozesse wie Expansionsvorgänge.

Um einen festen Verbund im Spritzguss-Formköper zu gewährleisten muss das Schrumpfungsverhalten und das Schwindungsverhalten des Materials des Basisträgers also zu jedem Zeitpunkt des In-Mold-Verfahrens von der Art her (also hinsichtlich Expansion oder Kontraktion) identisch mit dem der In-Mold-Formmasse des Formteils sein und vom Ausmaß her in etwa so groß ausfallen wie das der In-Mold-Formmasse des Formteils (also beispielsweise über ähnliche Längen-, Flächen und Raumausdehnungskoeffizienten verfügen). Demzufolge muss dies zumindest bei der Temperatur der plastisch erweichten In-Mold-Formmasse gelten und ebenfalls bei allen niedrigeren Temperaturen, die im Verlauf des Abkühlprozesses auftreten können. Als Grenzfall lässt sich eine diesbezügliche Anpassung grundsätzlich natürlich auch durch gezieltem Einsatz identischer Werkstoffe erreichen, jedoch ist die Erfindung nicht darauf beschränkt, solange die unterschiedlichen Materialen im wesentlichen gleiche Schrumpfungsverhalten und wenigstens im wesentlichen gleiche Schwindungsverhalten aufweisen.

Zusätzlich kann eine Seitenfläche des In-Mold-Flächenelements zumindest teilweise zur weiteren Aufnahme von Farbmitteln angepasst sein. Eine derartige Anpassung ist insbesondere dann erforderlich, wenn diese zweite Seitenfläche des In-Mold-Flächenelements von der zweiten Seite des Basisträgers gebildet wird, die im Verbund mit dem Formteil nach außen gerichtet angeordnet ist und bedruckbar ausgebildet sein soll. Eine Bedruckung kann dabei weitere optische Identifikationselemente umfassen, oder lediglich dekorativen Zwecken oder auch einer werbemäßigen Kennzeichnung dienen.

Das Identifikationselement verfügt über einzelne Komponenten, nämlich zumindest ein Antennenelement und ein Schaltkreiselement. Durch die Ausführung dieser Komponenten als Teil einer Sende-Empfangseinrichtung ist das Identifikationselement zur berührungslosen und sichtkontaktfreien Identifikation angepasst. Das Schaltkreiselement umfasst als Transponder zumindest einen analogen Schaltkreis zum Empfangen und gegebenenfalls Senden der Funksignale und kann darüber hinaus digitale Schaltkreise zur Verarbeitung der Signale sowie permanenten Speicher umfassen, der wiederum als einfach beschreibbarer Speicher oder als mehrfach beschreibbarer Speicher ausgebildet sein kann. Das Identifikationselement kann zusätzlich als RFID-Transponder ausgebildet sein.

Die Bestandteile des Schaltkreiselements können in dem Identifikationselement als einzelne Bauelemente vorliegen. Es ist natürlich auch möglich, dass mehrere dieser Bauelemente in einer Bauelementgruppe zusammengefasst sind, beispielsweise in integrierten Schaltkreisen oder Mikroprozessoren. Selbstverständlich kann ein Identifikationselement auch über mehrere dieser Bauelemente oder Bauelementgruppen verfügen. Ferner kann das Schaltkreiselement Trägerelemente umfassen, beispielsweise einen Sockel für einen integrierten Schaltkreis. Das Schaltkreiselement kann dabei direkt auf der Oberfläche des Basisträgers, auf der Oberfläche des Antennenelements oder aber in letzteres zumindest teilweise eingebettet angeordnet sein

Der elektrische Kontakt zwischen dem Schaltkreiselement oder den Bauelementgruppen und dem Antennenelement wird über übliche Verbindungen gebildet, beispielsweise über gedruckte Kontaktstrukturen, über Kontaktdrähte, über Kontaktstifte, leitende Verklebungen, Lötstellen oder dergleichen.

Zusätzlich kann ein integrierter Schaltkreis in eine schützende Polymermasse eingebettet sein. Die Einbettungsmasse umgibt den mit dem Antennenelement kontaktierten integrierten Schaltkreis und bildet so einen dickwandigen Thermoschutz, der einen direkten Kontakt des integrierten Schaltkreises mit der In-Mold-Formmasse verhindert und so die Gefahr einer thermischen Beeinträchtigung der Halbleiterelemente des Schaltkreises verringert. Die geometrische Ausgestaltung der Thermoschutzmasse beliebig sein, beispielsweise sphärisch-rund, als Rotationsellipsoid oder konisch, so dass heiße, im Spritzguss-Verfahren anströmende In-Mold-Formmasse die Einbettungsstruktur umfließen kann und zügig abgeleitet wird.

Diese Bauelemente können zum Betrieb bei beliebigen Frequenzen ausgelegt sein, beispielsweise zur funkbasierten Datenübertragung im UHF-Bereich, also im Bereich von etwa 100 MHz bis etwa 10 GHz, zur funkbasierten Datenübertragung im HF-Bereich, also im Bereich von etwa 10 kHz bis 100 MHz, oder aber zur Datenübertragung in mehreren Frequenzbereichen. Von praktischem Nutzen sind hierfür die für derartige Anwendungen zulässigen Frequenzbänder im UHF-Bereich zwischen 850 MHz und 950 MHz, 2,4 GHz bis 2,5 GHz und um 5,8 GHz sowie die Frequenzbänder im HF-Bereich zwischen 10 MHz und 15 MHz, etwa bei den typischen Frequenzen 13,56 MHz, 433 MHz, 868 MHz, 915 MHz, 950 MHz, 2,45 GHz und 5,8 GHz. Eine solche Ausbildung betrifft beispielsweise die Dimensionierung der einzelnen Komponenten, wie etwa der Fläche und Geometrie des Antennenelements oder die Auswahl von Oszillatorschaltungen.

Das Identifikationselement kann so innerhalb des In-Mold-Flächenelements angeordnet sein, dass das Identifikationselement direkt mit der Oberfläche des Basisträgers verbunden ist, also ohne dass zwischen dem Basisträger und dem Identifikationselement weitere schichtförmige Strukturen wie adhäsive oder protektive Zwischenschichten vorgesehen sind. Dabei liegt zumindest ein Teil der äußeren Oberfläche des Identifikationselements auf der einen Seite des In-Mold-Flächenelements frei, und zwar auf derjenigen Seite des In-Mold-Flächenelements, die beim späteren Verbinden mit dem Formteil mit der Spritzguss-Formmasse in Kontakt stehen wird, nämlich an der Kontaktseite des In-Mold-Flächenelements. Somit wird dieser Teil der Oberfläche des Identifikationselements auch mit der Spritzguss-Formmasse in Kontakt stehen. Dieser Teil der Oberfläche des Identifikationselements kann jeder Teil des Identifikationselements sein, etwa ein Teil der Oberfläche des Antennenelements.

Grundsätzlich kann das Antennenelement aus üblichen Materialien aufgebaut sein, etwa aus gestanzten oder gebogenen Abschnitten wie metallischen Folien, Stanzteilen oder Drähten oder direkt aus auf die Oberfläche aufgebrachten Schichten, wobei hierfür jegliches geeignete Metall Verwendung finden kann, beispielsweise Kupfer, Aluminium, Silber oder Gold. Natürlich kann das Antennenelement auch aus leitfähigen Polymeren, leitfähigen Farben, Leitklebern, Leitlacken, Leitpasten und dergleichen bestehen, die beispielsweise in einem Siebdruckverfahren aufgebracht werden können. Insbesondere solche Leitpasten und Leitlacke sind hierbei einsetzbar, die als leitende Komponenten in eine Lack- oder Farbmatrix eingebettete partikuläre Füllstoffe mit guter elektrischer Leitfähigkeit aufweisen, etwa Silberkolloide oder Graphit. Hierbei kann es sich um lösemittelhaltige Einkompontensysteme oder um Mehrkompontensysteme wie etwa solche aus Harz und Härter handeln oder auch um lösemittelfrei Systeme.

Bei der Ausbildung an der Kontaktfläche kann zudem das Antennenelement wärmeleitend und flächig ausgebildet sein. Ferner kann das Antennenelement derart angepasst sein, um die Wärme, die beim In-Mold-Verfahren an der ersten Seitenfläche des In-Mold-Flächenelements anfällt, über die Kontaktfläche zwischen dem In-Mold-Flächenelement und dem Spritzguss-Formteil zu verteilen. Eine derartige Anpassung besteht etwa in einer Ausführung der Antenne aus einem silbergefüllten Leitlack oder in einer flächenfüllend-flächenartigen Ausgestaltung des Antennenelements, wobei natürlich zusätzlich die Erfordernisse an die Geometrie zu berücksichtigen sind, die sich aus dem jeweils gewählten Frequenzbereich für eine funkbasierte Datenübertragung ergeben, beispielsweise die Ausgestaltung als flächenfüllende aber nicht-vollflächige Wendel- oder Spiralstruktur.

Als In-Mold-Flächenelement kommen grundsätzlich alle herkömmlichen In-Mold-Flächenelemente in Frage, sofern sie entsprechende erste und zweite Seitenflächen sowie die oben beschriebenen Elemente - Basisträger und Identifikationselement - umfassen. Die erste Seitenfläche des In-Mold-Flächenelements ist als Kontaktseite ausgebildet. An dieser liegt ein Teil der Oberfläche des Basisträgers frei und bildet so einen Teil der Kontaktseite. Zusätzlich kann zumindest ein Teil der Oberfläche des Identifikationselements frei liegen, etwa ein Teil der Oberfläche des Antennenelements.

Ferner ist die erste Seitenfläche angepasst, um in einem In-Mold-Verfahren mit der Oberfläche eines dabei aus plastisch erweichter In-Mold-Formmasse spritzgegossenen Formteils zu einem Spritzguss-Formkörper verbunden zu werden. Eine derartige Anpassung beinhaltet etwa die Verwendung eines spezifischen Materials für den freiliegenden Teil des Basisträgers sowie den gegebenenfalls freiliegenden Teils des Identifikationselements. Das spezifische Material ist im Hinblick auf die Temperatur und Zusammensetzung der beim Spritzguss eingesetzten Formmasse hinreichend beständig und verbindet sich vorzugsweise mit dieser stoffschlüssig. Ferner muss die Oberfläche des Identifikationselements und gegebenenfalls des Basisträgers für einen hinreichend stabilen Verbund mit der Oberfläche des Formteils im In-Mold-Verfahren ausgerüstet sein, was im einfachsten Fall durch Abstimmen der Materialien aufeinander geschehen kann.

Die zweite Seitenfläche des In-Mold-Flächenelements ist angepasst, im Verbund mit dem Formteil einen Teil der Oberfläche des Spritzguss-Formkörpers zu bilden. Dies hat etwa einen wichtigen Einfluss auf die Formgebung des In-Mold-Flächenelements, das flach genug ausgebildet sein muss, um in den jeweiligen Spritzguss-Formkörper im In-Mold-Verfahren eingebettet werden zu können. Für Spritzguss-Formkörper mit gewölbten Flächen ist hingegen eine entsprechend gewölbte oder flexible Ausbildung des In-Mold-Flächenelements erforderlich.

Zusätzlich kann eine Seite des Basisträgers als zweite Seitenfläche des In-Mold-Flächenelements ausgebildet sein. Die zweite Seitenfläche des In-Mold-Flächenelements kann zur Aufnahme von Farbmitteln angepasst sein. Eine derartige Anpassung ist sinnvoll, da die ansonsten häufig zur Herstellung von In-Mold-Etiketten eingesetzten Basisträger aus Materialien wie Polyolefinen bestehen, die ohne entsprechende Anpassung gar nicht oder nur schlecht zur Aufnahme von herkömmlichen Farbmitteln wie etwa Pigmenten oder Farbstoffen geeignet sind. Eine derartige Anpassung kann etwa in einer lokalen Modifikation der zweiten Seitenfläche bestehen (z. B. einem Beschichten).

Eine derartig angepasste zweite Seitenfläche kann dann mit Strukturen bedruckt werden, die zur optischen Identifikation des so individualisierten Spritzguss-Formkörpers geeignet sind. Hierdurch erhält das In-Mold-Flächenelement ein weiteres Identifikationselement, mittels dessen eine zusätzliche einfache Identifikation möglich wird, die visuell oder maschinell erfolgen kann. Ein derartiges weiteres Identifikationselement kann beliebig ausgebildet sein, etwa als auf einen bestimmten Flächenbereich aufgedruckte alphanumerische Zeichenkette, beispielsweise eine Kontrollziffer oder ein Kontrollwort, oder auch als aufgedruckter Zeichencode, etwa einem eindimensionalen, zweidimensionalen oder dreidimensionalen Barcode. Selbstverständlich kann das erfindungsgemäße In-Mold-Flächenelement auch mehr als ein Identifikationselement zur optischen Identifikation aufweisen, etwa einen Barcode und zusätzlich eine Kontrollziffer. Überdies kann die Anpassung dergestalt sein, dass die zweite Seitenfläche ein manuelles Beschriften des In-Mold-Flächenelement innerhalb des Spritzguss-Formkörpers gestattet.

Der Spritzguss-Formkörper umfasst das In-Mold-Flächenelement und das Formteil aus einer In-Mold-Formmasse. Daher muss das In-Mold-Flächenelement zum Verbinden mit dem Formteil ausgerüstet sein. Eine derartige Anpassung betrifft etwa das Material des In-Mold-Flächenelements in Relation zu dem der Formmasse, genauer, deren Eigenschaften wie etwa Plastifizierungstemperatur der In-Mold-Formmasse im Verhältnis zum Schmelzpunkt oder der Erweichungstemperatur des In-Mold-Flächenelements oder deren chemische Beständigkeit.

Die In-Mold-Formmasse - und somit auch das Formteil des Spritzguss-Formkörpers - besteht aus einem Material, das bei Temperaturen unterhalb der Verarbeitungstemperatur der plastisch erweichten In-Mold-Formmasse ein wenigstens im wesentlichen gleiches Schrumpfungsverhalten und ein wenigstens im wesentlichen gleiches Schwindungsverhalten wie das Material des Basisträgers aufweist. Dabei kann der Spritzguss-Formkörper eines oder mehrere In-Mold-Flächenelemente aufweisen, deren Identifikationselemente für gleiche Frequenzen oder zum Betrieb bei unterschiedlichen Frequenzen ausgelegt sind. Zusätzlich kann der Spritzguss-Formkörper natürlich auch In-Mold-Flächenelemente umfassen, die keine zur funkbasierten Datenübertragung angepassten Identifikationselemente aufweisen, sondern lediglich Identifikationselemente zur optischen Identifikation.

Als In-Mold-Formmasse können grundsätzlich alle beim Spritzguss üblichen Formmassen verwendet werden, also Polymere wie beispielsweise Polystyrole, Polyolefine, Polyvinylchlorid, Polyamide wie Nylon oder auch Copolymere, etwa Acrylnitril-Butadien-Styrol-Copolymere. Dies umfasst ebenfalls härtbare und nichthärtbare Polymere und deren Vorstufen. Im Verlauf des Spritzgießens wird die In-Mold-Formmasse plastifiziert und dann in plastisch erweichter Form in die Kavität des Werkzeugs eingespritzt.

Besonders vorteilhaft ist hierbei ein thermoplastisches Material, etwa Polyolefine wie Polyethylen oder Polypropylen, sowie Mischungen mit oder aus einem solchen Material. Ein derartiges Material, das einen großen Anteil an Polyolefinen enthält, wird als polyolefinbasiertes Material bezeichnet, wobei dieses Material vollständig aus Polyolefinen bestehen oder nichtpolyolefinische Bestandteile aufweisen kann, etwa andere Polymere oder Füllstoffe. Besonders vorteilhaft ist hierbei ein polyolefinbasiertes Material, das Niederdruckpolyethylen (PE-HD oder HD PE; Polyethylen mit hoher Dichte) enthält. Günstigerweise ist das Niederdruckpolyethylen dann in dem organisch-polymeren Anteil des Materials zu einem Massenanteil enthalten, der den größten Massenanteil des organischen Polymeranteils innerhalb des polyolefinbasiertes Materials darstellt.

Bei dem Verfahren zur Herstellung des In-Mold-Flächenelements ist zunächst der Basisträger entsprechend der im In-Mold-Verfahren einzusetzenden In-Mold-Formmasse des Formteils auszubilden, genauer gesagt im Hinblick auf das Schrumpfungsverhalten und Schwindungsverhalten, so dass dies bei Temperaturen unterhalb der Temperatur der plastisch erweichten In-Mold-Formmasse dem der In-Mold-Formmasse wenigstens im wesentlichen gleich ausfällt. Hierdurch wird gegenüber herkömmlichen Verfahren zur Herstellung von In-Mold-Flächenelementen, in denen eine weitere Zwischenschicht auf die Kontaktfläche aufgebracht werden muss, eine signifikante Vereinfachung des Fertigungsprozesses erzielt.

Das Aufbringen des Antennenelements auf die erste Seite des Basisträgers kann beliebig ausgeführt werden, etwa durch lokales Beschichten des Basisträgers mit üblichen Bedruckungs-, Ätz-, Bedampfungs- oder Sputtertechniken sowie galvanisch oder in vakuumtechnischen Verfahren, etwa mittels CVD. Ein Auftrag streichfähiger Pigmente, Lacke oder Pasten kann beispielsweise mittels herkömmlicher Drucktechniken wie etwa Siebdruck erfolgen. Als formstabile Teile ausgebildete Antennenelemente wie Drähte oder Stanzbiegeteile, können zum Beispiel durch Auflegen des formstabilen Teils auf den Basisträger und Fixieren am Basisträger aufgebracht werden.

Das Befestigen des Schaltkreiselements auf der ersten Seite des Basisträgers und Kontaktieren des Schaltkreiselements mit dem Antennenelement kann ebenfalls auf herkömmliche Weisen durchgeführt werden, etwa durch Verlöten oder Verschweißen der einzelnen Elemente, durch Verkleben mit Leitklebern oder leitfähigen Polymeren, durch Fixieren mit Befestigungsmitteln wie Klebstoffen oder Schrauben oder mittels eines Trägerelements, etwa einem Sockel für integrierte Schaltkreise, und späteres Kontaktieren mit Leitpasten, Leitlacken oder über Techniken zur Metallabscheidung. Es ist ebenfalls möglich, Befestigen und Kontaktieren des Schaltkreiselements als einen einzigen Schritt auszuführen, indem etwa der zum Kontaktieren verwendete Leitkleber oder das Lot etwa aufgrund einer gleichsam starken Adhäsion wie Kohäsion zugleich ein Fixieren des Schaltkreiselements erlauben.

Wird das Antennenelement mittels Bedrucken der ersten Seite des Basisträgers mit einem Leitlack aufgebracht, so ist zusätzlich nach dem Aufbringen des Antennenelements und vor dem Befestigen und Kontaktieren des Schaltkreiselements ein Trocknen des Antennenelements bei erhöhten Temperaturen erforderlich. Alternativ oder zusätzlich kann das Trocknen auch bei verringertem Luftdruck durchgeführt werden. Bei beiden Möglichkeiten ist es wichtig, dass dies unter milden Bedingungen ausgeführt wird, um ein plötzliches Austreten von Gasen zu vermeiden und so eine Blasenbildung zu verhindern. Auf diese Weise wird das Antennenelement von auftragungsbedingten Flüssigkeiten befreit, die dann nicht mehr während des weiteren In-Mold-Verfahrens austreten können, wodurch einer Beschädigung der Antennenstruktur entgegengewirkt wird.

Ferner kann nach dem Befestigen und Kontaktieren des Schaltkreiselements ein weiterer Verfahrensschritt durchgeführt werden, nämlich ein Einbetten des Schaltkreiselements in eine Thermoschutzmasse. Dies kann auf übliche Weise erfolgen, beispielsweise durch Auftragen eines zähflüssigen Polymers als Thermoschutzmasse auf das Schaltkreiselement, durch sorgfältiges Einbetten des Schaltkreiselements in die Polymermasse und durch anschließendes Aushärten oder Abkühlen des Polymers. Hierbei ist es möglich, der Thermoschutzmasse beim Erhärten oder Abkühlen zusätzlich eine günstige Form zu verleihen und diese etwa als mit der Grundfläche zur Oberfläche des Basisträgers ausgerichteten Kegel auszubilden.

Zur Verbesserung des Haftungsvermögens und der Oberflächenspannung der Seitenflächen des Basisträgers kann der Basisträger vor dem Aufbringen des Antennenelements einer Vorbehandlung unterzogen werden. Die Vorbehandlung kann eine oder beide Seiten des Basisträgers umfassen und mit üblichen Verfahren durchgeführt werden, beispielsweise als nasschemische Reinigung oder mittels einer Corona-Entladung, bei der der Basisträger über eine geerdete Walzenelektrode an einer Hochspannungs-Sprühelektrode entlang geführt und dadurch Funkenentladungen ausgesetzt wird. Um eine elektrostatische Beschädigung der Schaltkreiselemente zu verhindern muss eine Corona-Behandlung natürlich vor dem Aufbringen der Schaltkreiselemente erfolgen, vorzugsweise sogar vor dem Aufbringen der Antennenelemente.

Schließlich kann ein weiteres Identifikationselement zur optischen Identifikation auf das In-Mold-Flächenelement aufgebracht werden. Das Aufbringen kann beliebig erfolgen, etwa durch Bekleben des Basisträgers mit einem vorher gedruckten Identifikationselement zur optischen Identifikation oder aber durch Bedrucken der zweiten Seitenfläche des In-Mold-Flächenelements mit dem weiteren Identifikationselement in Form einer spezifischen alphanumerischen Zeichenfolge oder eines ein-, zwei- oder dreidimensionalen Barcodes. Vorzugsweise erfolgt das Bedrucken direkt auf den Basisträger im Bereich der zweiten Seitenfläche des In-Mold-Flächenelements oder auf der bedruckbar ausgebildeten zweiten Seite des Basisträgers. Anschließend kann das weitere Identifikationselement durch Aufbringen eines Schutzlackes auf die zur optischen Identifikation bedruckte zweite Seitenfläche des In-Mold-Flächenelements oder des Basisträgers erfolgen. Hierzu können übliche Beschichtungstechniken zum Einsatz gelangen, etwa ein Bedrucken mit UV-resistenten Lacken oder aushärtenden Polymeren. Auf diese Weise kann eine mechanisch stabile, chemisch resistente und/oder korrosionsbeständige Schutzversiegelung des optischen Identifikationselements erreicht werden.

Bei dem Verfahren zur Herstellung des Spritzguss-Formkörpers ist zuvorderst die im In-Mold-Verfahren einzusetzende In-Mold-Formmasse des Formteils auszubilden. Genauer gesagt ist die In-Mold-Formmasse im Hinblick auf das Schrumpfungsverhalten und Schwindungsverhalten anzupassen, so dass dieses bei Temperaturen unterhalb der Temperatur der plastisch erweichten In-Mold-Formmasse zu dem des Basisträgers wenigstens im wesentlichen gleich ausfällt. Eine derartige Ausbildung kann durch den Einsatz geeigneter Materialien vereinfacht werden und zusätzlich auch eine Beimengung entsprechender Additive oder Füllstoffe wie etwa Weichmacher, Vernetzer, Expander und dergleichen zu der In-Mold-Formmasse beinhalten, die das Schrumpfungsverhalten und Schwindungsverhalten in erforderlicher Weise beeinflussen.

Weiterhin wird das In-Mold-Flächenelement in die leere Kavität eines Spritzgusswerkzeugs eingebracht und dort an dem Spritzgusswerkzeug entsprechend der Position, die das In-Mold-Flächenelement innerhalb des Spritzguss-Formkörpers einnehmen soll, wiederablösbar fixiert, so dass das In-Mold-Flächenelement bis zum Abschluss des In-Mold-Verfahrens fixiert ist, beim Herauslösen des fertigen Spritzguss-Formkörpers aus dem Spritzgusswerkzeugs aber zerstörungsfrei von der Oberfläche des Spritzgusswerkzeugs abgelöst werden kann.

Das Einspritzen der plastisch erweichten In-Mold-Formmasse in das Spritzgusswerkzeug sowie das Abkühlen der In-Mold-Formmasse in dem Spritzgusswerkzeug sowie das Herauslösen des erkalteten und verfestigten Spritzguss-Formkörpers aus dem Spritzgusswerkzeugs erfolgt hierbei ebenfalls nach üblichen Verfahren.

Im folgenden soll die Erfindung unter Bezugnahme auf die in den Abbildungen dargestellten vorteilhaften Ausführungsformen beispielhaft näher beschrieben werden.

Es zeigen hierbei
Fig. 1 einen perspektivischen Querschnitt durch eine erste Ausführungsform des erfindungsgemäßen In-Mold-Flächenelements,
Fig. 2 einen Querschnitt durch eine zweite Ausführungsform des In-Mold-Flächenelements.

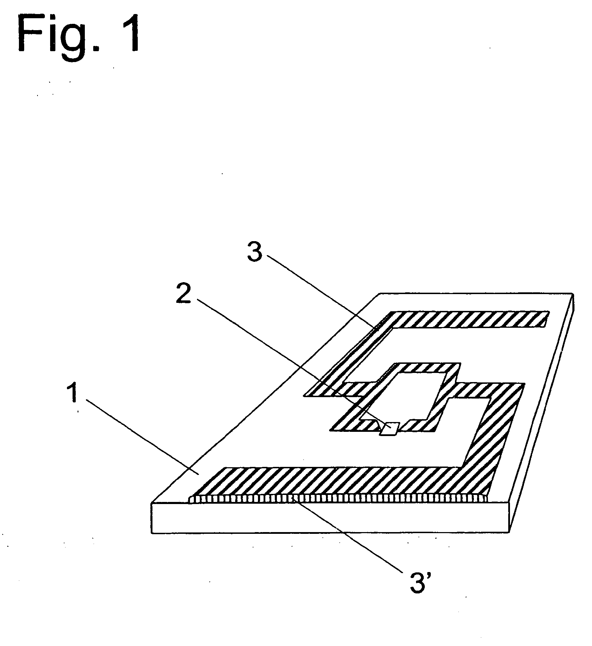

In Fig. 1 ist ein In-Mold-Flächenelement mit einem Basisträger 1 und einem Identifikationselement 2, 3, 3' dargestellt. Die als Kontaktseite angepasste erste Seitenfläche liegt in dieser perspektivischen Darstellung oben und die mit einem weiteren Identifikationselement 2, 3, 3' ausgerüstete zweite Seitenfläche demzufolge unten.

Basisträger 1 besteht aus matt-weißer, ungestrichener einlagiger Folie aus einer Polyolefin-Mischung, die zu 60 Gew.-% hochmolekulares Polyethylen mit einer Mikroporosität von 65 % enthält. Die Verwendung dieses Materials ermöglicht erfindungsgemäß ein Verbinden dieses In-Mold-Flächenelements mit einem Formteil aus einer In-Mold-Formmasse, die aus Niederdruckpolyethylen (PE-HD) besteht. Die Folie enthält zusätzlich zu der Polyolefin-Mischung zu einem Gewichtsanteil von etwa 60 % einen Füllstoff, der hauptsächlich aus Siliziumdioxidpartikeln besteht. Die Verwendung dieses gut bedruckbaren Materials gewährleistet eine zweckgerichtete Anpassung der zweiten Seitenfläche des In-Mold-Flächenelements zur Aufnahme von Farbmitteln. Die (nicht dargestellte) Oberfläche der zweiten Seitenfläche ist mit einer Kontrollziffer sowie mit einem eindimensionalen Barcode und zusätzlich mit einem zweidimensionalen Barcode zur optischen Identifikation versehen.

Das Identifikationselement 2, 3, 3' umfasst eine integrierte Baugruppe als Schaltkreiselement 2, in dem analoge und digitale Schaltkreise und ein Permanentspeicher untergebracht sind, und ferner ein Antennenelement 3. Das Identifikationselement 2, 3, 3' ist vorliegend zur berührungslosen und sichtkontaktfreien Identifikation angepasst, wobei die Anpassung in der Ausbildung als RFID-Transponder zur funkbasierten Datenübertragung im UHF-Bereich besteht. Das Antennenelement ist dazu als Antenne für Frequenzen im UHF-Bereich flächig ausgelegt. An der vorderen geschnittenen Kante des In-Mold-Flächenelements ist die Schnittfläche 3' des Antennenelements 3 erkennbar.

Antennenelement 3 wurde in einem Siebdruckverfahren mit einer leitfähigen und zugleich auch wärmeleitenden Paste, die mit Silberpartikeln gefüllt ist, direkt auf den Basisträger aufgebracht. Antennenelement 3 befindet sich daher direkt an der Oberfläche des Basisträgers. Zusätzlich bildet damit der in Fig. 1 oben dargestellte Teil der Oberfläche des Antennenelements einen Teil der Kontaktseite des In-Mold-Flächenelements und liegt dort auch frei. Infolge der Ausbildung aus metallisch wärmeleitenden Partikeln erlaubt die spezielle Anordnung und Geometrie ein hervorragendes Verteilen der beim In-Mold-Verfahren an der ersten Seitenfläche anfallenden Wärme über die Kontaktfläche zwischen dem In-Mold-Flächenelement und dem Spritzguss-Formteils. Zusätzlich gestattet die konkrete Ausbildung einen sicheren und festen Verbund mit der Oberfläche Spritzguss-Formteils während der Herstellung dieses Formteils in einem In-Mold-Verfahren.

Ein derartiges In-Mold-Flächenelements wird erfindungsgemäß in einem mehrstufigen Verfahren hergestellt, bei dem zunächst der Basisträger 1 entsprechend der im In-Mold-Verfahren einzusetzenden In-Mold-Formmasse des Formteils ausgebildet wird. Das vorliegende In-Mold-Flächenelement soll für einen Verbund in einem Spritzguss-Formkörper geeignet sein, der aus einem Polyolefin besteht, genauer gesagt aus Niederdruckpolyethylen. Demzufolge wird als Basisträger 1 eine Folie aus einem Material eingesetzt (Teslin^{®} von PPG Industries), das zu 60 % einen Füllstoff enthält, der hauptsächlich aus Siliziumdioxidpartikeln besteht. Weiterhin enthält das Material als gerüstkonstituierenden Bestandteil eine Polyolefin-Mischung, die zu 60 Gew.-% hochmolekulares Polyethylen mit einer Mikroporosität von 65 % enthält. Infolge der Ausbildung der gerüstkonstituierenden Bestandteile als überwiegend aus Niederdruckpolyethylen bestehend wird ein Basisträger 1 erhalten, der hinsichtlich des Schrumpfungsverhaltens und Schwindungsverhaltens dem Schrumpfungsverhalten und Schwindungsverhalten der In-Mold-Formmasse annähernd gleich ist, zumal bei Temperaturen unterhalb der Temperatur der plastisch erweichten In-Mold-Formmasse.

Mittels einer herkömmlichen Digitaldruckmaschine wird das weitere Identifikationselement zur optischen Identifikation in Form eines eindimensionalen Barcodes auf die zweite Seite des Basisträgers 1 und damit auf die zweite Seitenfläche des In-Mold-Flächenelements aufgetragen.

Dann wird zur Vorbehandlung dann eine Seite des Basisträgers 1 zur Verbesserung des Haftungsvermögens und zur Oberflächenbehandlung in einer industrieüblichen Corona-Einrichtung einer Corona-Entladung ausgesetzt.

Nun wird das Antennenelement 3 auf einer Seite des Basisträgers 1 in einem herkömmlichen Siebdruckverfahren mit dem pastösen Silberleitlack auf Partikelbasis strukturiert aufgetragen und der Basisträger 1 mit dem restfeuchten Antennenelement 3 bei 50 °C im Luftstrom im Verlauf von 2 h getrocknet.

Zuletzt wird das Schaltkreiselement 2 auf der ersten Seite des Basisträgers 1 mittels eines Transferklebebandes befestigt und die externen Anschlüsse des Schaltkreiselements 2 mit dem Antennenelement 3 leitend durch Auftragen eines dünnflüssigen Leitlacks aus Silberpartikeln verbunden.

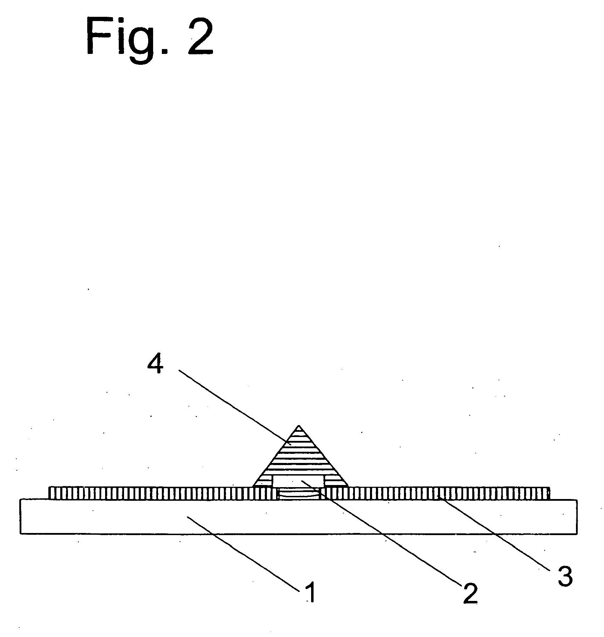

In Fig. 2 ist eine zweite Ausführungsform des In-Mold-Flächenelements gezeigt. Dieses weist einen Basisträger 1 und ein Identifikationselement 2, 3, 3' auf. Auch hier ist die als Kontaktseite angepasste erste Seitenfläche des In-Mold-Flächenelements oben liegend dargestellt und die mit einem weiteren Identifikationselement ausgerüstete zweite Seitenfläche unten. Soweit nicht anders beschrieben, sind die in dieser zweiten Ausführungsform eingesetzten Komponenten mit der des ersten Ausführungsbeispiels identisch.

Im Unterschied zu der in Fig. 1 dargestellten Ausführung ist das als integrierter Schaltkreis ausgebildete Schaltkreiselement 2 hier nicht direkt auf der Oberfläche von Basisträger 1 angeordnet, sondern auf der Oberseite des zuvor auf Basisträger 1 aufgebrachten Antennenelements 3. Zusätzlich ist der integrierte Schaltkreis 2 in eine Thermoschutzmasse 4 eingebettet, die diesen umgibt. Die Umhüllung durch Thermoschutzmasse 4 ist hierbei dickwandig und zugleich kegelförmig ausgeführt, wobei die Spitze des Kegels vom In-Mold-Flächenelement weg zeigt. Das Umhüllen erfolgt bei der Fertigung nach dem Befestigen und Kontaktieren des Schaltkreiselements 2 durch Auftragen eines hochviskosen Zweikomponenten-Epoxidharz mit isolierenden Eigenschaften, mit dem der integrierte Schaltkreis durch manuelles Verformen des Harzes sorgfältig umgeben wird.

## Patentansprüche

1. Spritzguss-Formnkörper mit einem Formteil (5) aus einer In-Mold-Formmasse und mit zumindest einem In-Mold-Flächenelemet,
wobei das In-Mold-Flächenelement einen flächenförmigen Basisträger (1) und ein Identifikationselement (2, 3) sowie eine erste Seitenfläche und eine zweite Seitenfläche aufweist,
von denen die erste Seitenfläche als Kontaktseite angepasst ist, um in einem In-Mold-Verfahren mit der Oberfläche des dabei aus plastisch erweichter In-Mold-Formmasse spritzgegossenen Formteils zu dem Spritzguß-Formkörper verbunden zu werden,
und von denen die zweite Seitenfläche angepasst ist, im Verbund mit dem Formteil einen Teil der Oberfläche des Spritzguß-Formkörpers zu bilden,
wobei der Basisträger (1) einlagig ausgebildet ist und aus einem Material besteht, das bei Temperaturen unterhalb der Temperatur der plastisch erweichten In-Mold-Formmasse ein wenigstens im wesentlichen gleiches Schrumpfungsverhalten und ein wenigstens im wesentlichen gleiches Schwindungsverhalten aufweist wie die In-Mold-Formmasse des Formteil, und zumindest ein Teil der Oberfläche des Basisträgers (1) einen freiliegenden Teil der Kontaktseite des In-Mold-Flächenelements bildet,
wobei das Identifikzitionselement (2, 3) zur berührungslosen und sichtkontaktfreien Identifikation angepasst ist und zumindest ein Antennenelement (3) und ein Schaltkreiselement (2) umfasst, die zu einer funkbasierten Datenübertragung mit einem externen Lesesystem angepasst sind,
und wobei das Material des Basistragers (1) eine Zusammensetzung ist, die Polyolefins und Füllstoffe umfasst, wobei die Füllstoffe Siliziumdioxidpartikel und/oder Kieseisäurepartikel enthalten.

2. Spritzguss-Formkörper nach Anspruch 1, **dadurch gekennzeichnet, dass** die Füllstoffe hauptsächlich aus Siliziumdioxidpartikeln bestehen.

3. Spritzguss-Formkörper nach Anspruch 1 oder 2, **dadurch gekennzeichnet, dass** die Füllstoffe in dem Material des Basisträgers (1) zu einem Gewichtsanteil von etwa 60 % enthalten sind.

4. Spritzguss-Formkörper nach einem der vorstehenden Ansprüche, **dadurch gekennzeichnet, dass** die Polyolefine in dem Material des Basisträgers (1) als Polyolefin-Mischung vorliegen, die hochmolekulares Polyethylen umfasst.

5. Spritzguss-Formkörecr nach Anspruch 4, **dadurch gekennzeichnet, dass** das hochmolekulare Polyethylen in dem Material des Basisträgers (1) in einer Mikroporosität von 65 % vorliegt.

6. Spritzguss-Formkörper nach Anspruch 5, **dadurch gekennzeichnet, dass** die Polyolefin-Mischung zu einem Anteil von 60 Gew.-% hochmolekulares Polyethylen enthält.

7. Spritzguss-Formkörper nach einem der vorstehenden Ansprüche, weiterhin **dadurch gekennzeichnet, dass** das Identifikationselement (2, 3) direkt mit der Oberfläche des Basisträgers (1) verbunden ist und zumindest ein Teil der Oberfläche des Identifikationselements (2, 3) einen freiliegenden Teil der Kontaktseite des In-Mold-Flächenelements bildet.

8. Spritzguss-Formkörper nach Anspruch 7, weiterhin **dadurch gekennzeichnet, dass** der an der Kontaktseite des In-Mold-flächenelements freiliegende Teil der Oberfläche des Idenfikationselement (2, 3) zumindest ein Teil der Oberfläche des Antennenelements (3) ist.

9. Spritzguss-Formkörper nach einem der vorstehenden Ansprüche, weiterhin **dadurch gekennzeichnet, dass** das Antennenelement (3) aus Leitlack gebildet ist.

10. Spritzguss-Formkürper nach einem der vorstehenden Ansprüche, weiterhin **dadurch gekennzeichnet, dass** das Identifikationselement (2, 3) als RFID-Transponder ausgebildet ist.

11. Spritzguss-Formkörper nach einem der vorstehenden Ansprüche, weiterhin **dadurch gekennzeichnet, dass** das Schaltkreiselement (2) als integrierter Schaltkreis ausgebildet ist, der mit dem Antennenelement (3) kontaktiert in eine Thermoschutzmasse (4) eingebettet ist.

12. Spritzguss-Formkörper nach einem der vorstehenden Ansprüche, weiterhin **dadurch gekennzeichnet, dass** die zweite Seitenfläche zumindest ein weiteres Identifikationselement zur optischen Identifikation aufweist.

13. Spritzguss-Formkörper nach Anspruch 12, weiterhin **dadurch gekennzeichnet**, das das weitere Identifikationselement zumindest einen Flächenbereich mit einem Barcode aufweist.

## Claims

1. Injection-moulded article having a moulding (5) consisting of an in-mould moulding composition and at least one in-mould laminar element,
wherein the in-mould laminar element has a laminar base carrier (1) and an identification element (2, 3) as well as a first side surface and a second side surface,
of which the first side surface is adapted as a contact side in order to be bonded in an in-mould process to the surface of the moulding which is injection-moulded from plastically softened in-mould moulding composition, to form the injection-moulded article,
and of which the second side surface is adapted to form, in association with the moulding, a portion of the surface of the injection-moulded article,
wherein the base carrier (1) is formed with a single layer and made of a material which, at temperatures below the temperature of the plastically softened in-mould moulding composition, has at least substantially the same shrinkage behaviour and at least substantially the same contraction behaviour as the in-mould moulding composition of the moulding, and at least a portion of the surface of the base carrier (1) forms an exposed portion of the contact side of the in-mould laminar element,
wherein the identification element (2, 3) is adapted for identification without contact and without visibility and comprises at least one antenna element (3) and a circuit element (2) which are adapted for radio-based data transmission with an external reading system,
and wherein the material of the base carrier (1) is a composition which comprises polyolefins and fillers, the fillers containing silicon dioxide particles and/or silicic acid particles.

2. Injection-moulded article according to claim 1, **characterised in that** the fillers mainly consist of silicon dioxide particles.

3. Injection-moulded article according to claim 1 or 2, **characterised in that** the fillers are contained in the material of the base carrier (1) in a ratio of approximately 60% by weight.

4. Injection-moulded article according to any of the preceding claims, **characterised in that** the polyolefins are present in the material of the base carrier (1) as a polyolefin mixture which comprises high-molecular-weight polyethylene.

5. Injection-moulded article according to claim 4, **characterised in that** the high-molecular-weight polyethylene is present in the material of the base carrier (1) with a microporosity of 65%.

6. Injection-moulded article according to claim 5, **characterised in that** the polyolefin mixture contains high-molecular-weight polyethylene in a ratio of 60% by weight.

7. Injection-moulded article according to any of the preceding claims, further **characterised in that** the identification element (2, 3) is directly bonded to the surface of the base carrier (1) and at least a portion of the surface of the identification element (2, 3) forms an exposed portion of the contact side of the in-mould laminar element.

8. Injection-moulded article according to claim 7, further **characterised in that** the portion of the surface of the identification element (2, 3) which is exposed on the contact side of the in-mould laminar element is at least a portion of the surface of the antenna element (3).

9. Injection-moulded article according to any of the preceding claims, further **characterised in that** the antenna element (3) is composed of conductive lacquer.

10. Injection-moulded article according to any of the preceding claims, further **characterised in that** the identification element (2, 3) is designed as an RFID transponder.

11. Injection-moulded article according to any of the preceding claims, further **characterised in that** the circuit element (2) is designed as an integrated circuit which, in contact with the antenna element (3), is embedded in a thermal protection composition (4).

12. Injection-moulded article according to any of the preceding claims, further **characterised in that** the second side surface has at least one further identification element for optical identification.

13. Injection-moulded article according to claim 12, further **characterised in that** the further identification element has an least one surface region with a bar code.

## Revendications

1. Corps moulé par injection avec une pièce moulée (5) à partir d'une matière à mouler dans un moule et avec au moins un élément plat pour un moule,
l'élément plat pour un moule présentant un support de base (1) de forme plate et un élément (2, 3) d'identification ainsi qu'une première face latérale et une deuxième face latérale,
dont la première face latérale est adaptée en tant que face de contact pour être reliée à la surface de la pièce moulée par injection à partir d'une matière à mouler dans un moule alors plastifiée lors d'un procédé de moulage dans un moule pour former le corps moulé par injection,
et dont la deuxième face latérale est adaptée afin de former, en association avec la pièce moulée, une partie de la surface du corps moulé par injection,
le support de base (1) se présentant sous la forme d'une couche unique et étant composé d'une matière qui présente, à des températures sous la température de la matière à mouler dans un moule plastifiée, un comportement de rétrécissement au moins sensiblement identique et un comportement de retrait au moins sensiblement identique à la matière à mouler dans le moule de la pièce moulée, et au moins une partie de la surface du support de base (1) formant une partie dénudée de la face de contact de l'élément plat pour un moule,
l'élément (2, 3) d'identification étant adapté à une identification sans contact et sans contact optique et comprenant au moins un élément (3) d'antenne et un composant (2) de circuit adaptés à une transmission de données par radio avec un système de lecture externe,
et la matière du support de base (1) étant une composition qui comprend des polyoléfines et des matériaux de remplissage, les matériaux de remplissage contenant des particules de dioxyde de silicium et/ou des particules de silice.

2. Corps moulé par injection selon la revendication 1, **caractérisé en ce que** les matériaux de remplissage sont principalement composés de particules de dioxyde de silicium.

3. Corps moulé par injection selon la revendication 1 ou 2, **caractérisé en ce que** les matériaux de remplissage sont compris dans la matière du support de base (1) dans une proportion d'environ 60 % du poids.

4. Corps moulé par injection selon l'une des revendications précédentes, **caractérisé en ce que** les polyoléfines sont présentes dans la matière du support de base (1) sous forme de mélange de polyoléfine, lequel comprend du polyéthylène macromoléculaire.

5. Corps moulé par injection selon la revendication 4, **caractérisé en ce que** le polyéthylène macromoléculaire est présent dans la matière du support de base (1) avec une microporosité de 65 %.

6. Corps moulé par injection selon la revendication 5, **caractérisé en ce que** le mélange de polyoléfine comprend du polyéthylène macromoléculaire dans une proportion de 60 % du poids.

7. Corps moulé par injection selon l'une des revendications précédentes, **caractérisé de plus en ce que** l'élément (2, 3) d'identification est directement relié à la surface du support de base (1) et qu'au moins une partie de la surface de l'élément d'identification (2, 3) forme une partie dénudée de la face de contact de l'élément plat pour un moule.

8. Corps moulé par injection selon la revendication 7, **caractérisé de plus en ce que** la partie de la surface de l'élément d'identification (2, 3) dénudée au niveau de la face de contact de l'élément plat pour un moule est au moins une partie de la surface de l'élément (3) d'antenne.

9. Corps moulé par injection selon l'une des revendications précédentes, **caractérisé de plus en ce que** l'élément (3) d'antenne est formé d'un vernis conducteur.

10. Corps moulé par injection selon l'une des revendications précédentes, **caractérisé de plus en ce que** l'élément d'identification (2, 3) se présente sous la forme d'un transpondeur RFID.

11. Corps moulé par injection selon l'une des revendications précédentes, **caractérisé de plus en ce que** le composant (2) de circuit se présente sous la forme d'un circuit intégré qui est incorporé dans une matière (4) de protection thermique, étant en contact avec l'élément (3) d'antenne.

12. Corps moulé par injection selon l'une des revendications précédentes, **caractérisé de plus en ce que** la deuxième face latérale présente au moins un élément d'identification supplémentaire en vue de l'identification optique.

13. Corps moulé par injection selon la revendication 12, **caractérisé de plus en ce que** l'élément d'identification supplémentaire présente au moins une zone plane avec un code-barres.
